# EUROPEAN PATENT APPLICATION

(11) **EP 4 492 718 A1**
(43) Date of publication of application: **15.01.2025**
(21) Application number: 23766148.3
(22) Date of filing: 10.03.2023
(51) Int. Cl.: H04L 5/00

(54) **WAKE-UP SIGNAL RECEIVING METHOD AND APPARATUS, TERMINAL, AND NETWORK SIDE DEVICE**

(30) Priority: 11.03.2022 CN 202210243386
(71) Applicant: VIVO MOBILE COMMUNICATION CO., LTD., Dongguan, Guangdong 523863 (CN)
(72) Inventor: LI, Dongru, Dongguan, Guangdong 523863 (CN); QU, Xin, Dongguan, Guangdong 523863 (CN); YING, Zuolong, Dongguan, Guangdong 523863 (CN); SHEN, Xiaodong, Dongguan, Guangdong 523863 (CN); PAN, Xueming, Dongguan, Guangdong 523863 (CN)
(74) Representative: Shieldmark
(86) International application number: PCT/CN2023/080885
(87) International publication number: WO 2023/169571

(57) **Abstract**

This application discloses a wake-up signal receiving method and apparatus, a terminal, and a network-side device, and pertains to the mobile communication field. The wake-up signal receiving method in embodiments of this application includes: obtaining, by a terminal, first information, where the first information is related to first content, and the first content is carried in a first wake-up signal; and determining, by the terminal, monitoring of the first content based on the first information.

## Description

### CROSS-REFERENCE TO RELATED APPLICATIONS

This application claims priority to Chinese patent application No. 202210243386.3, filed with the China National Intellectual Property Administration on March 11, 2022 and entitled "WAKE-UP SIGNAL RECEIVING METHOD AND APPARATUS, TERMINAL, AND NETWORK-SIDE DEVICE", which is incorporated herein by reference in its entirety.

### TECHNICAL FIELD

This application pertains to the field of mobile communication technologies, and specifically, relates to a wake-up signal receiving method and apparatus, a terminal, and a network-side device.

### BACKGROUND

In an 802.11ba system, a terminal (also referred to as user equipment (User Equipment, UE)) includes two parts: a main interface and a wake-up receiver. The main interface is configured to send and receive wireless fidelity (Wireless Fidelity, Wi-Fi) data. The wake-up receiver is configured to wake up the main interface. Before being woken up, the main interface is in a closed state and does not send or receive data. The wake-up receiver receives a wake-up signal (Wake Up signal, WUS) transmitted by an 802.11 access point (Access Point, AP). The WUS signal may be a binary on-off keying (On-Off Keying, OOK) modulated signal, so that the wake-up receiver (wake up receiver, WUR) can detect the wake-up signal through envelope detection.

In addition, in 802.11ba, a length of data information carried in a WUS is not fixed. A method for determining a WUS information length may be: performing determining through detection on a received channel power indicator (Received Channel Power Indicator, RCPI) and received signal power. When received signal strength sharply decreases, it indicates that reception of the WUS ends. In another method, a terminal may alternatively indicate, through a media access control (Media Access Control, MAC) layer, a physical layer (Physical Layer, PHY) to determine time at which reception of a wake-up signal ends.

However, in an NR system, the foregoing unfixed WUS information length is not conducive to WUS decoding by the terminal, and also increases complexity and latency of decoding by the terminal.

### SUMMARY

Embodiments of this application provide a wake-up signal receiving method and apparatus, a terminal, and a network-side device, to resolve a problem that complexity and latency of decoding by a terminal increase due to an unfixed length of information carried in a WUS.

According to a first aspect, a wake-up signal receiving method is provided. The method is applied to a terminal and includes:
obtaining, by a terminal, first information, where the first information is related to first content, and the first content is carried in a first wake-up signal; and
determining, by the terminal, monitoring of the first content based on the first information.

According to a second aspect, a wake-up signal receiving apparatus is provided, including:
a receiving module, configured to obtain first information, where the first information is related to first content, and the first content is carried in a first wake-up signal; and
a monitoring module, configured to determine monitoring of the first content based on the first information.

According to a third aspect, a wake-up signal receiving method is provided. The method is applied to a network-side device and includes:
transmitting, by a network-side device, first information to a terminal, where the first information is related to first content and is used to indicate the terminal to determine monitoring of the first content, and the first content is carried in a first wake-up signal; and
transmitting, by the network-side device, first wake-up signal to the terminal.

According to a fourth aspect, a wake-up signal receiving apparatus is provided, including:
a first transmitting module, configured to transmit first information to a terminal, where the first information is related to first content and is used to indicate the terminal to determine monitoring of the first content, and the first content is carried in a first wake-up signal; and
a second transmitting module, configured to transmit first wake-up signal to the terminal.

According to a fifth aspect, a terminal is provided, where the terminal includes a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface. The processor is configured to determine monitoring of first content based on first information. The communication interface is configured to obtain the first information, where the first information is related to the first content, and the first content is carried in a first wake-up signal.

According to a seventh aspect, a network-side device is provided, where the network-side device includes a processor and a memory, the memory stores a program or instructions capable of running on the processor, and when the program or instructions are executed by the processor, the steps of the method according to the first aspect are implemented.

According to an eighth aspect, a wake-up signal receiving system is provided, including: a terminal and a network-side device, where the terminal may be configured to perform the steps of the wake-up signal receiving method according to the first aspect, and the network-side device may be configured to perform the steps of the wake-up signal receiving method according to the third aspect.

According to a ninth aspect, a readable storage medium is provided, where the readable storage medium stores a program or instructions, and when the program or instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions, to implement the method according to the first aspect, or implement the method according to the third aspect.

According to an eleventh aspect, a computer program or program product is provided, where the computer program or program product is stored in a storage medium, and the computer program or program product is executed by at least one processor to implement the wake-up signal receiving method according to the first aspect, or implement the steps of the wake-up signal receiving method according to the third aspect.

In embodiments of this application, a terminal obtains first information, where the first information is related to first content, and the first content is carried in a first wake-up signal; and the terminal determines monitoring of the first content based on the first information, to reduce uncertainty of monitoring of the first content, reduce complexity and latency of decoding and detection of the first content, and achieve reliability of the communication.

### BRIEF DESCRIPTION OF THE DRAWINGS

FIG. 1 is a schematic structural diagram of a wireless communication system to which embodiments of this application are applicable;
FIG. 2 is a schematic structural diagram of a terminal according to an embodiment of this application;
FIG. 3 is a schematic diagram of a format of wake-up information according to an embodiment of this application;
FIG. 4 is a schematic flowchart of a wake-up signal receiving method according to an embodiment of this application;
FIG. 5 is a schematic diagram of another format of wake-up information according to an embodiment of this application;
FIG. 6 is a schematic diagram of another format of wake-up information according to an embodiment of this application;
FIG. 7 is a schematic diagram of another format of wake-up information according to an embodiment of this application;
FIG. 8 is a schematic diagram of another format of wake-up information according to an embodiment of this application;
FIG. 9 is a schematic diagram of another format of wake-up information according to an embodiment of this application;
FIG. 10 is a schematic diagram of another format of wake-up information according to an embodiment of this application;
FIG. 11 is a schematic diagram of another format of wake-up information according to an embodiment of this application;
FIG. 12 is a schematic structural diagram of a wake-up signal receiving apparatus according to an embodiment of this application;
FIG. 13 is another schematic flowchart of a wake-up signal receiving method according to an embodiment of this application;
FIG. 14 is another schematic structural diagram of a wake-up signal receiving apparatus according to an embodiment of this application;
FIG. 15 is a schematic structural diagram of a communication device according to an embodiment of this application;
FIG. 16 is a schematic structural diagram of a terminal for implementing embodiments of this application; and
FIG. 17 is a schematic structural diagram of a network-side device for implementing embodiments of this application.

### DETAILED DESCRIPTION

The following clearly describes technical solutions in embodiments of this application with reference to accompanying drawings in embodiments of this application. Clearly, the described embodiments are some but not all of embodiments of this application. All other embodiments obtained by a person of ordinary skill in the art based on embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances, so that embodiments of this application can be implemented in an order other than the order illustrated or described herein. In addition, the objects distinguished by "first" and "second" usually belong to one category, and the number of objects is not limited. For example, there may be one or more first objects. In addition, in this specification and the claims, "and/or" represents at least one of connected objects, and the character "/" typically represents an "or" relationship between the associated objects.

It should be noted that technologies described in embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in embodiments of this application are usually used interchangeably, and the technologies described herein may be used in the aforementioned systems and radio technologies, and may also be used in other systems and radio technologies. In the following descriptions, a new radio (New Radio, NR) system is described for an illustration purpose, and NR terms are used in most of the following descriptions. However, these technologies may also be applied to applications other than an NR system application, for example, a 6th generation (6th Generation, 6G) communication system.

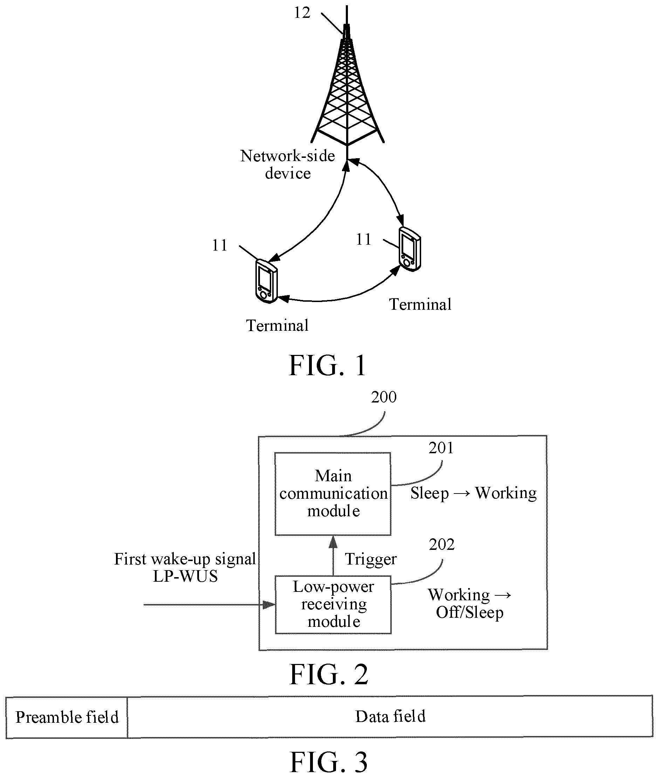

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in embodiments of this application. The network-side device 12 may include an access network device or a core network device. The access network device may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the art. Provided that the same technical effect is achieved, the base station is not limited to a specific technical term. It should be noted that the base station in the NR system is used only as an example for description in embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in embodiments of this application, but a specific type of the core network device is not limited.

The following describes in detail a wake-up signal receiving method and apparatus, a terminal, and a network-side device provided in embodiments of this application with reference to accompanying drawings and by using some embodiments and application scenarios thereof.

In an embodiment, a first wake-up signal is a low-power wake-up signal (Low Power Wake Up Signal, LP-WUS). The LP-WUS is received by a low-power receiver of a terminal, and is used to wake up a main communication module of the terminal. As shown in FIG. 2, a terminal 200 includes two modules. A first model 201 is a main communication module, configured to send and receive mobile communication data. A second module 202 is a low-power wake-up receiving module, configured to receive the foregoing low-power wake-up signal. In an energy-saving state, the terminal turns on the low-power receiving module to monitor the LP-WUS, and turns off the main communication module. When downlink data arrives, a network-side device transmits a low-power wake-up signal to the terminal. After detecting the low-power wake-up signal by using the low-power receiving module, the terminal performs a series of determining and then triggers the main communication module to switch from an off or sleep state to a working state. In this case, the low-power receiving module may switch from a working state to an off or sleep state or remain in the working state.

A basic framework of the LP-WUS (information content carried in the LP-WUS) is shown in FIG. 3 below.

A preamble field (preamble field) is used to carry a preamble (preamble). A purpose of the preamble includes but is not limited to at least one of LP-WUS detection, synchronization, and data rate (data rate) determining. In addition, the preamble may be further used to indicate a user identity (Identity, ID), a user group ID, or the like.

A data field is used to carry a data part.

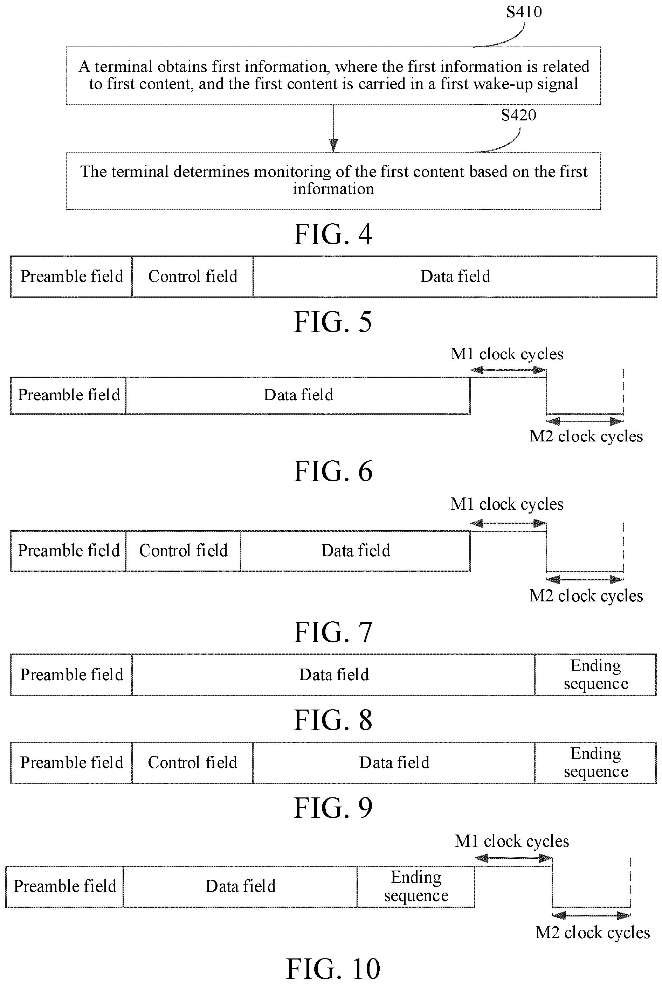

As shown in FIG. 4, an embodiment of this application provides a wake-up signal receiving method. The method is performed by a terminal. In other words, the method may be performed by software or hardware installed on the terminal. The method includes the following steps.

S410: The terminal obtains first information, where the first information is related to first content, and the first content is carried in a first wake-up signal.

It should be understood that the first Information may be configured by a network-side device, for example, the first information may be configured by a system information block (System Information Block, SIB) message or a radio resource control release (Radio Resource Control release, RRC release) message, or the first information may be agreed upon in a protocol. The first wake-up signal may be the foregoing LP-WUS.

In an implementation, the first content may include data field information carried in the first wake-up signal, as shown in FIG. 3.

In another implementation, the first content may include a preamble field, or may include other fields of the first wake-up signal. For example, the first content is all information carried in the first wake-up signal.

S420: The terminal determines monitoring of the first content based on the first information.

The first information may be used to indicate, to the terminal, at least one of a length of the first content, an ending position of the first content, and a monitoring duration of the first content.

The terminal determines the monitoring of the first content based on the received first information. For example, the terminal determines at least one of the length of the first content, the ending position of the first content, and the monitoring duration of the first content, based on the received first information.

It can be learned from the technical solution in the foregoing embodiment that, in this embodiment of this application, the terminal obtains the first information, where the first information is related to the first content, and the first content is carried in the first wake-up signal; and the terminal determines monitoring of the first content based on the first information, so that the length, the ending position, or the monitoring duration of the first content can be determined, to further reduce uncertainty of monitoring of the first content, reduce complexity and latency of decoding and detection of the first content, and achieve reliability of the communication.

Based on the foregoing embodiment, further, the first information may include at least one of the following:
N1 pieces of length information, where the length information is used to indicate the length of the first content;
N2 pieces of ending position information, where the position information is used to determine the ending position of the first content; and
N3 pieces of monitoring duration information, where the monitoring duration information is used to indicate the monitoring duration of the first content, where
N1, N2, and N3 are positive integers.

In an implementation, S420 includes determining at least one of the following:
the length of the first content;
the ending position of the first content; and
the monitoring duration of the first content monitored by the terminal, for example, starting time and ending time of monitoring the first content by the terminal.

In an implementation, the length information may specifically include a duration or an information length of the first content.

In an implementation, for the information length, the length of the first content may be expressed as follows: The length of the first content is N4 data units, where N4 is a positive integer. The first information may indicate the number of data units occupied by the first content, to determine the information length of the first content. It can be understood that the data unit is a determined length configured on a network side or agreed upon in a protocol.

In an implementation, for the duration, the length of the first content may be expressed as follows: The duration of the first content is N5 time units, where N5 is a positive integer. The first information may indicate the number of time units occupied by the first content, to determine a size of time resources occupied by the first content.

In an implementation, the time unit may be any one of a slot (slot), a symbol (symbol), a millisecond (millisecond, ms), a subframe (subframe), a system frame (frame), and a superframe (superframe).

In an implementation, the time unit may adapt to in-band (in-band) and out-of-band (out-of-band) application scenarios of the first wake-up signal. For example, a time unit used by the terminal when the first wake-up signal is configured in band may be the same as or different from a time unit used by the terminal when the first wake-up signal is configured out of band.

It should be understood that, the in-band means that bandwidth for transmitting the first wake-up signal belongs to an NR band, and the out-of-band means that bandwidth for transmitting the first wake-up signal does not belong to an NR band.

The ending position information is identification information for indicating the ending position of the first content. The terminal determines the ending position of the first content based on the ending position information. In an implementation, the ending position information may include at least one of the following:
ending sequence (ending sequence) information; and
delimiter information, where
the ending sequence and/or the delimiter is located following the first content and is used to indicate the ending of the first content.

Optionally, the ending sequence may be a special sequence, and specifically, the ending sequence may be a sequence consist of 0 and 1. For example, the ending sequence is an all-0 or all-1 sequence. The terminal may identify the ending sequence through moving correlation or sequence correlation detection to determine the length or the ending position of the first content.

Optionally, a length of the ending sequence may be a fixed value, and the length value may be included in information of the ending sequence. For example, the length of the ending sequence is N6 data units, where N6 is a positive integer.

Optionally, the ending sequence is encoded in a specific coding scheme, for example, the ending sequence adopts the Manchester encoding.

For the delimiter, also referred to as a delimiter character, the terminal may determine the length or the ending position of the first content, for example, by detecting the jumping edge between a high level and a low level or the duration of the high level.

A pattern (pattern) of the delimiter may be a specific pattern. For example, A specific delimiter pattern includes a high level with M1 clock cycles and a low level with M2 clock cycles, as shown in FIG. 6.

In an embodiment, a network may configure both the ending sequence and the delimiter by the first information. The terminal determines the ending position of the first content based on both the ending sequence and delimiter.

In an implementation, all terminals may use a same ending sequence and/or a same delimiter. In another embodiment, different terminals use their own ending sequences and/or delimiters, or different terminal groups use their own ending sequences and/or delimiters. A mapping or a correspondence between a terminal or a terminal group and its related ending sequence and/or delimiter may be configured by the network-side device or agreed upon in a protocol. A terminal may determine its related terminal group according to a specific rule.

In an implementation, the first content may further include the ending sequence and/or the delimiter.

In an implementation, the monitoring duration information includes at least one of the following:
information of a monitoring window (monitoring window or duration), where the terminal monitors the first content in the monitoring window; and
information of a timer (timer), where the terminal monitors the first content during the running of the timer.

In this embodiment, the network-side device configures monitoring window information corresponding to the first content or timer information corresponding to the first content. The terminal determines monitoring duration of the first content based on the monitoring window and the timer.

In an implementation, a starting position of the monitoring window and/or the timer is at least one of the following:
an ending position of a preamble field of the first wake-up signal;
an ending position of a control field of the first wake-up signal, where the control field is carried in first wake-up signal to indicate related control information to the terminal, and the control field may be located following the preamble field, and/or the control field is located preceding a data field carried in the first wake-up signal; and
a starting position of the first content.

It should be understood that the monitoring duration of the first content is larger than or equal to the duration of the first content, to ensure successful reception of the first content.

It should be understood that a time unit of the monitoring window or the timer may be any one of a slot, a symbol, a millisecond, a subframe, a system frame, and a superframe.

It can be learned from the technical solution in the foregoing embodiment that, in this embodiment of this application, the terminal obtains the first information, where the first information includes at least one of the N1 pieces of length information, the N2 pieces of ending position information, and the N3 pieces of monitoring duration information, so that the terminal determines at least one of the length, the ending position, and the monitoring duration of the first content based on the first information, to further reduce complexity and latency of decoding the first content by the terminal.

Based on the foregoing embodiment, further, when a value of N1, N2, or N3 is 1, the terminal may determine monitoring of the first content based on the first information. However, if a value of N1, N2, or N3 is larger than 1, target information needs to be further determined, and monitoring of the first content is determined based on the target information.

In an implementation, S420 includes:
determining target information based on an indication of a first indicator field; and
determining monitoring of the first content based on the target information, where
the target information includes at least one of the following:
   target length information determined from the N1 pieces of length information;
   target position information determined from the N2 pieces of position information; and
   target monitoring duration information determined from the N3 pieces of monitoring duration information.

In an implementation, the first indicator field includes at least one of the following in the first wake-up signal:
a preamble field; and
a control field (Control field).

Further, the control field is located following the preamble field, and/or the control field is located preceding a data field.

In an implementation, the first content may further include the control field.

In an implementation, in a case that the first information includes more than one piece of length information, for example, the first information obtained by the terminal includes the N1 pieces of length information, if N1 is larger than or equal to 2, the terminal may use, based on an indication by the preamble field and/or the control field, one of the length information as target length information to determine the length of the first content.

For example, the network-side device configures, by using higher layer signaling, four candidate lengths, such as a length 1, a length 2, a length 3, and a length 4, of the data field in the first wake-up signal for a terminal that supports an LP-WUS or a WUS, the first information includes four pieces of length information, and the first content is the data field in the first wake-up signal. In this case, the length information is used to indicate a length of the data field in the first wake-up signal.

When the terminal receives the first wake-up signal, in an implementation, the terminal obtains length indication information of the data field from the preamble field based on a wake-up signal format 1 (WUS format 1) shown in FIG. 3, to determine the length of the data field, namely, the length of the first content. It is configured by the network or agreed upon in a protocol that the preamble field includes 2-bit length indication information of the data field. For example, a correspondence is as follows: "00" corresponds to the length 1, ..., and "11" corresponds to the length 4.

In another implementation, the length indication information of the data field may be obtained from the control field based on a WUS format 2, to determine the length of the data field. It is determined by the network or agreed upon in a protocol that the control field is added following the preamble field and preceding the data field. The control field includes 2-bit length indication information of the data field. For example, a correspondence is as follows: "00" corresponds to the length 1, ..., and "11" corresponds to the length 4.

In another implementation, the length indication information of the data field may be obtained from the preamble field and the control field based on a wake-up signal format 2 (WUS format 2) shown in FIG. 5, to determine the length of the data field. It is determined by the network or agreed upon in a protocol that the control field is added following the preamble field and preceding the data field. The control field includes one least significant bit (Least Significant Bit, LSB) of the length indication information of the data field, and the preamble includes one most significant bit (Most Significant Bit, MSB) of the length indication information of the data field. The LSB and the MSB constitute complete 2-bit length indication information of the data field. For example, a correspondence is as follows: "00" corresponds to the length 1, ..., and "11" corresponds to the length 4.

In an implementation, the length of the data field that is indicated by the length information is information length. In this case, based on the determined data unit, a length unit of the data field is a data unit. The data unit has a fixed length, for example, 8 bytes. The four candidate lengths are configured to correspond to different numbers of data units. The length of the data field is indicated by a total of 2 bits in the preamble field and/or the control field, so that the number of data units corresponding to the data field is known.

In another implementation, the length of the data field that is indicated by the length information is duration. In this case, based on the determined time unit, a unit of duration of the data field is a time unit. The time unit may be a slot, a symbol, or the like. The network may configure, by using the first information, duration of a plurality of data fields; and then indicate, by using a total of 2 bits in the preamble field and/or the control field, to determine the duration of the data field.

In an implementation, in a case that the first information includes the ending sequence and/or the delimiter, for example, the first information obtained by the terminal includes the N2 pieces of ending position information, if N2 is larger than or equal to 2, the terminal may use, based on an indication by the preamble field and/or the control field, one or more of the ending position information as target ending position information to determine the ending position of the first content. The first content may be the data field in the first wake-up signal.

In an implementation, it is configured by the network or agreed upon in a protocol that a pattern of the delimiter is a specific pattern. For example, the first information includes a delimiter. As shown in FIG. 6 and FIG. 7, with reference to the WUS format 1 and the WUS format 2, a delimiter with a pattern shown in the figures, for example, a high level in M1 clock cycles and a low level in M2 clock cycles, is placed following the data field to indicate the ending of the data field. After detecting the delimiter, the terminal knows an ending position of the data field. The terminal may detect the delimiter by using a capability accumulation detection method.

In another implementation, it is configured by the network or agreed upon in a protocol that the ending sequence is a specific sequence. For example, the first information includes an ending sequence. As shown in FIG. 8 and FIG. 9, with reference to the WUS format 1 and format 2, a specific ending sequence shown in the figures is placed following the data field to indicate the ending of the data field. After detecting the specific ending sequence, the terminal knows an ending position of the data field.

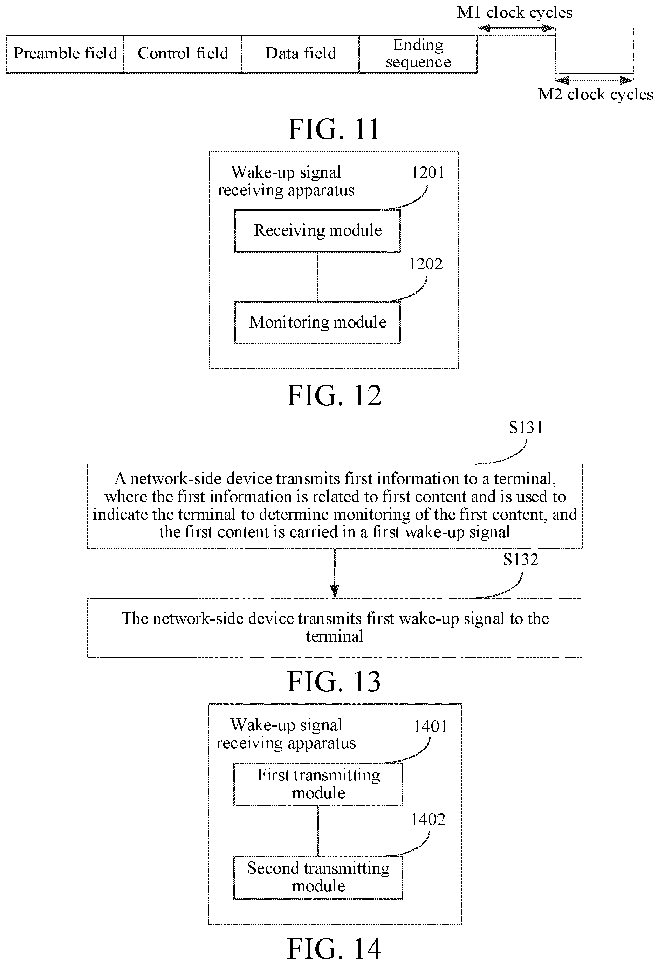

In another implementation, it is configured by the network-side device or agreed upon in a protocol that a specific ending sequence and a delimiter is used to indicate the ending of the data field. For example, the first information includes an ending sequence and a delimiter. In this case, in an implementation, by default, the terminal may use both the ending sequence and the delimiter to determine the ending position of the first content. As shown in FIG. 10 and FIG. 11, the data field may precede the delimiter followed by the ending sequence or precede the ending sequence followed by the delimiter.

In another implementation, the terminal may use, based on an indication by the preamble field and/or the control field, only the ending sequence or the delimiter to determine the ending position of the first content, or the preamble field and/or the control field may indicate to use both the ending sequence and the delimiter to determine the ending position of the first content.

In an implementation, in a case that the first information includes more than one monitoring window or timer, for example, the first information obtained by the terminal includes the N3 pieces of monitoring duration information, if N3 is larger than or equal to 2, the terminal may use, based on an indication by the preamble field and/or the control field, one of the monitoring windows or timers to determine the monitoring duration of the first content monitored by the terminal. The first content may be the data field in the first wake-up signal.

Based on configuration by the network-side device or an agreement in a protocol, the terminal may use an ending position of the preamble field of the first wake-up signal, a control ending position, or the starting position of the first content as a starting position of the monitoring window or the timer to start to monitor the first content; and complete reception of the first content before the monitoring window or the timer ends.

A time unit of the monitoring window or the timer may be a slot, a symbol, an ms, a subframe, a frame, or the like.

It can be learned from the technical solution in the foregoing embodiment that, in this embodiment of this application, in a case that the first information includes a plurality of values, the target information is determined based on the indication of the first indicator field, and monitoring of the first content is determined based on the target information, so that the length or the ending position of the first content can be indicated more flexibly, to achieve communication reliability.

The wake-up signal receiving method provided in this embodiment of this application may be performed by a wake-up signal receiving apparatus. In embodiments of this application, a wake-up signal receiving apparatus provided in embodiments of this application is described by using an example in which the wake-up signal receiving apparatus performs the wake-up signal receiving method.

As shown in FIG. 12, the wake-up signal receiving apparatus includes a receiving module 1201 and a monitoring module 1202.

The receiving module 1201 is configured to obtain first information, where the first information is related to first content, and the first content is carried in a first wake-up signal. The monitoring module 1202 is configured to determine monitoring of the first content based on the first information.

Further, the first content includes a data field of the first wake-up signal.

It can be learned from the technical solution in the foregoing embodiment that, in this embodiment of this application, the first information is obtained, where the first information is related to the first content, and the first content is carried in the first wake-up signal; and monitoring of the first content is determined based on the first information, so that a length, an ending position, or a monitoring duration of the first content can be determined, to further reduce uncertainty of monitoring of the first content, reduce complexity and latency of decoding the first content by a terminal, and achieve communication reliability.

Based on the foregoing embodiment, further, the monitoring module is configured to determine at least one of the following:
the length of the first content;
the ending position of the first content; and
the monitoring duration of the first content monitored by the terminal.

Further, the first information includes at least one of the following:
N1 pieces of length information, where the length information is used to indicate the length of the first content;
N2 pieces of ending position information, where the position information is used to determine the ending position of the first content; and
N3 pieces of monitoring duration information, where the monitoring duration information is used to indicate the monitoring duration of the first content monitored by the terminal, where
N1, N2, and N3 are positive integers.

Further, the ending position information includes at least one of the following:
ending sequence information; and
delimiter information, where
the ending sequence and/or the delimiter is located following the first content and is used to indicate the ending of the first content.

Further, the monitoring duration information includes at least one of the following:
information of a monitoring window, where the terminal monitors the first content in the monitoring window; and
information of a timer, where the terminal monitors the first content during the running of the timer.

Further, a starting position of the monitoring window and/or the timer is at least one of the following:
an ending position of a preamble field of the first wake-up signal;
an ending position of a control field of the first wake-up signal; and
a starting position of the first content.

Further, the monitoring duration of the first content is larger than or equal to the duration of the first content.

Further, a length of the first content is N4 data units, and N4 is a positive integer.

Further, the duration of the first content is N5 time units, and N5 is a positive integer.

Further, the time unit is any one of a slot, a symbol, a millisecond, a subframe, a system frame, and a superframe.

It can be learned from the technical solution in the foregoing embodiment that, in this embodiment of this application, the first information is obtained, where the first information includes at least one of the N1 pieces of length information, the N2 pieces of ending position information, and the N3 pieces of monitoring duration information; and at least one of the length, the ending position, and the monitoring duration of the first content is determined based on the first information, to further reduce complexity and latency of decoding the first content by the terminal.

Based on the foregoing embodiment, further, the monitoring module is configured to:
determine target information based on an indication of a first indicator field; and
determine monitoring of the first content based on the target information, where
the target information includes at least one of the following:
   target length information determined from the N1 pieces of length information;
   target position information determined from the N2 pieces of position information; and
   target monitoring duration information determined from the N3 pieces of monitoring duration information.

Further, the first indicator field includes at least one of the following in the first wake-up signal:
a preamble field; and
a control field.

Further, the control field is located following the preamble field, and/or the control field is located preceding a data field, where
information of the data field is carried in the first wake-up signal.

Further, the first content further includes at least one of the following:
a preamble field;
a control field;
an ending sequence; and
a delimiter.

It can be learned from the technical solution in the foregoing embodiment that, in this embodiment of this application, in a case that the first information includes a plurality of values, the target information is determined based on the indication of the first indicator field, and monitoring of the first content is determined based on the target information, so that the length, the ending position, or the monitoring duration of the first content can be indicated more flexibly, to achieve communication reliability.

The wake-up signal receiving apparatus in embodiments of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in embodiments of this application.

The wake-up signal receiving apparatus provided in this embodiment of this application is capable of implementing the processes implemented in the method embodiments of FIG. 3 to FIG. 11, with the same technical effect achieved. To avoid repetition, details are not described herein again.

As shown in FIG. 13, an embodiment of this application further provides a wake-up signal receiving method. The method is performed by a network-side device. In other words, the method may be performed by software or hardware installed on the network-side device. The method includes the following steps.

S131: The network-side device transmits first information to a terminal, where the first information is related to first content and is used to indicate the terminal to determine monitoring of the first content, and the first content is carried in a first wake-up signal.

S132: The network-side device transmits first wake-up signal to the terminal.

Further, the first content includes a data field of the first wake-up signal.

It can be learned from the technical solution in the foregoing embodiment that, in this embodiment of this application, the network-side device transmits the first information to the terminal, where the first information is related to the first content and is used to indicate the terminal to determine monitoring of the first content, and the first content is carried in the first wake-up signal; and the network-side device transmits the first wake-up signal to the terminal, so that a length, an ending position, or a monitoring duration of the first content can be determined, to further reduce uncertainty of monitoring of the first content, reduce complexity and latency of decoding the first content by the terminal, and achieve communication reliability.

Based on the foregoing embodiment, further, the first information includes at least one of the following:
N1 pieces of length information, where the length information is used to indicate the length of the first content;
N2 pieces of ending position information, where the position information is used to determine the ending position of the first content; and
N3 pieces of monitoring duration information, where the monitoring duration information is used to indicate the monitoring duration of the first content monitored by the terminal, where
N1, N2, and N3 are positive integers.

Further, the ending position information includes at least one of the following:
ending sequence information; and
delimiter information, where
the ending sequence and/or the delimiter is located following the first content and is used to indicate the ending of the first content.

Further, the monitoring duration information includes at least one of the following:
information of a monitoring window, where the terminal monitors the first content in the monitoring window; and
information of a timer, where the terminal monitors the first content during the running of the timer.

Further, a starting position of the monitoring window and/or the timer is at least one of the following:
an ending position of a preamble field of the first wake-up signal;
an ending position of a control field of the first wake-up signal; and
a starting position of the first content.

Further, the monitoring duration of the first content is larger than or equal to the duration of the first content.

Further, a length of the first content is N4 data units, and N4 is a positive integer.

Further, the duration of the first content is N5 time units, and N5 is a positive integer.

Further, the time unit is any one of a slot, a symbol, a millisecond, a subframe, a system frame, and a superframe.

It can be learned from the technical solution in the foregoing embodiment that, in this embodiment of this application, the first information includes at least one of the N1 pieces of length information, the N2 pieces of ending position information, and the N3 pieces of monitoring duration information, so that the terminal determines at least one of the length, the ending position, and the monitoring duration of the first content based on the first information, to further reduce complexity and latency of decoding the first content by the terminal.

Based on the foregoing embodiment, further, the first wake-up signal includes a first indicator field, and the first indicator field is used to indicate the terminal to determine target information, where
the target information includes at least one of the following:
target length information determined from the N1 pieces of length information;
target position information determined from the N2 pieces of position information; and
target monitoring duration information determined from the N3 pieces of monitoring duration information.

Further, the first indicator field includes at least one of the following in the first wake-up signal:
a preamble field; and
a control field.

Further, the control field is located following the preamble field, and/or the control field is located preceding a data field, where
information of the data field is carried in the first wake-up signal.

Further, the first content further includes at least one of the following:
a preamble field;
a control field;
an ending sequence; and
a delimiter.

It can be learned from the technical solution in the foregoing embodiment that, in this embodiment of this application, in a case that the first information includes a plurality of values, the target information is determined based on the indication of the first indicator field, and monitoring of the first content is determined based on the target information, so that the length, the ending position, or the monitoring duration of the first content can be indicated more flexibly, to achieve communication reliability.

The wake-up signal receiving method provided in this embodiment of this application may be performed by a wake-up signal receiving apparatus. In embodiments of this application, a wake-up signal receiving apparatus provided in embodiments of this application is described by using an example in which the wake-up signal receiving apparatus performs the wake-up signal receiving method.

As shown in FIG. 14, the wake-up signal receiving apparatus includes a first transmitting module 1401 and a second transmitting module 1402.

The first transmitting module 1401 is configured to transmit first information to a terminal, where the first information is related to first content and is used to indicate the terminal to determine monitoring of the first content, and the first content is carried in a first wake-up signal. The second transmitting module 1402 is configured to transmit first wake-up signal to the terminal.

Further, the first content includes a data field of the first wake-up signal.

It can be learned from the technical solution in the foregoing embodiment that, in this embodiment of this application, the first information is transmitted to the terminal, where the first information is related to the first content and is used to indicate the terminal to determine monitoring of the first content, and the first content is carried in the first wake-up signal; and the first wake-up signal is transmitted to the terminal, so that a length, an ending position, or a monitoring duration of the first content can be determined, to further reduce uncertainty of monitoring of the first content, reduce complexity and latency of decoding the first content by the terminal, and achieve communication reliability.

Based on the foregoing embodiment, further, the first information includes at least one of the following:
N1 pieces of length information, where the length information is used to indicate the length of the first content;
N2 pieces of ending position information, where the position information is used to determine the ending position of the first content; and
N3 pieces of monitoring duration information, where the monitoring duration information is used to indicate the monitoring duration of the first content monitored by the terminal, where
N1, N2, and N3 are positive integers.

Further, the ending position information includes at least one of the following:
ending sequence information; and
delimiter information, where
the ending sequence and/or the delimiter is located following the first content and is used to indicate the ending of the first content.

Further, the monitoring duration information includes at least one of the following:
information of a monitoring window, where the terminal monitors the first content in the monitoring window; and
information of a timer, where the terminal monitors the first content during the running of the timer.

Further, a starting position of the monitoring window and/or the timer is at least one of the following:
an ending position of a preamble field of the first wake-up signal;
an ending position of a control field of the first wake-up signal; and
a starting position of the first content.

Further, the monitoring duration of the first content is larger than or equal to the duration of the first content.

Further, a length of the first content is N4 data units, and N4 is a positive integer.

Further, the duration of the first content is N5 time units, and N5 is a positive integer.

Further, the time unit is any one of a slot, a symbol, a millisecond, a subframe, a system frame, and a superframe.

It can be learned from the technical solution in the foregoing embodiment that, in this embodiment of this application, the first information includes at least one of the N1 pieces of length information, the N2 pieces of ending position information, and the N3 pieces of monitoring duration information, so that the terminal determines at least one of the length, the ending position, and the monitoring duration of the first content based on the first information, to further reduce complexity and latency of decoding the first content by the terminal.

Based on the foregoing embodiment, further, the first wake-up signal includes a first indicator field, and the first indicator field is used to indicate the terminal that the to determine target information, where
the target information includes at least one of the following:
target length information determined from the N1 pieces of length information;
target position information determined from the N2 pieces of position information; and
target monitoring duration information determined from the N3 pieces of monitoring duration information.

Further, the first indicator field includes at least one of the following in the first wake-up signal:
a preamble field; and
a control field.

Further, the control field is located following the preamble field, and/or the control field is located preceding a data field, where
information of the data field is carried in the first wake-up signal.

Further, the first content further includes at least one of the following:
a preamble field;
a control field;
an ending sequence; and
a delimiter.

It can be learned from the technical solution in the foregoing embodiment that, in this embodiment of this application, in a case that the first information includes a plurality of values, the target information is determined based on the indication of the first indicator field, and monitoring of the first content is determined based on the target information, so that the length, the ending position, or the monitoring duration of the first content can be indicated more flexibly, to achieve communication reliability.

The wake-up signal receiving apparatus in embodiments of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in embodiments of this application.

The wake-up signal receiving apparatus provided in this embodiment of this application is capable of implementing the processes implemented in the method embodiment of FIG. 13, with the same technical effect achieved. To avoid repetition, details are not described herein again.

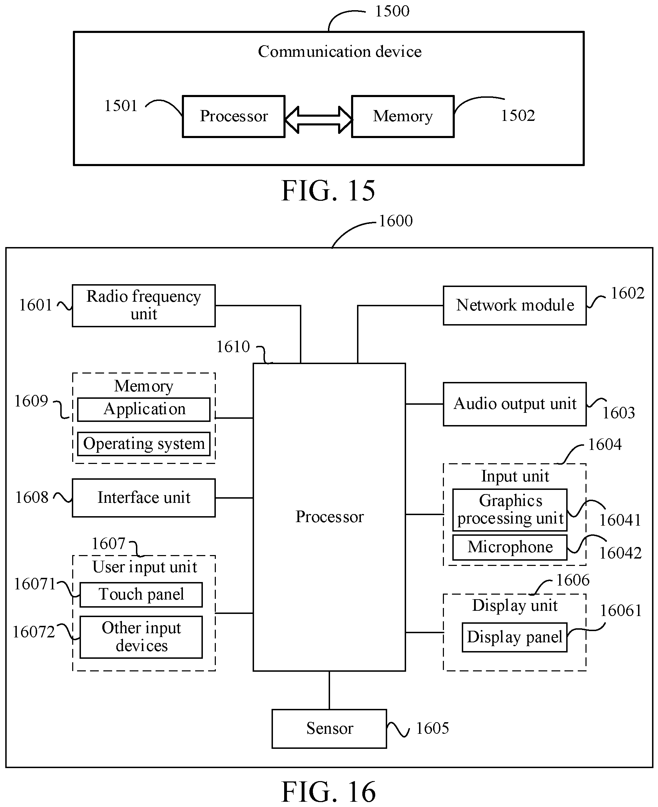

Optionally, as shown in FIG. 15, an embodiment of this application further provides a communication device 1500, including a processor 1501 and a memory 1502. The memory 1502 stores a program or instructions capable of running on the processor 1501. For example, in a case that the communication device 1500 is a terminal, when the program or instructions are executed by the processor 1501, the steps in the embodiments of the wake-up signal receiving method are implemented, with the same technical effect achieved. In a case that the communication device 1500 is a network-side device, when the program or instructions are executed by the processor 1501, the steps in the embodiments of the wake-up signal receiving method are implemented, with the same technical effect achieved. To avoid repetition, details are not described herein again.

An embodiment of this application further provides a terminal, including a processor and a communication interface. The processor is configured to determine monitoring of first content based on first information. The communication interface is configured to obtain the first information, where the first information is related to the first content, and the first content is carried in a first wake-up signal. The terminal embodiment corresponds to the foregoing terminal-side method embodiment, and all implementation processes and implementations of the foregoing method embodiment are applicable to the terminal embodiment, with the same technical effect achieved. Details are as follows: FIG. 16 is a schematic diagram of a hardware structure of a terminal for implementing embodiments of this application.

The terminal 1600 includes but is not limited to at least some of the following components: a radio frequency unit 1601, a network module 1602, an audio output unit 1603, an input unit 1604, a sensor 1605, a display unit 1606, a user input unit 1607, an interface unit 1608, a memory 1609, a processor 1610, and the like.

A person skilled in the art can understand that the terminal 1600 may further include a power supply (for example, a battery) that supplies power to each component. The power supply may be logically connected to the processor 1610 by using a power management system, to implement functions such as charging management, discharging management, and power consumption management by using the power management system. The terminal structure shown in FIG. 16 does not constitute a limitation on the terminal. The terminal may include more or fewer components than those shown in the figure, or some components may be combined, or there may be a different component layout. Details are not described herein again.

It should be understood that, in this embodiment of this application, the input unit 1604 may include a graphics processing unit (Graphics Processing Unit, GPU) 16041 and a microphone 16042. The graphics processing unit 16041 processes image data of a static picture or a video that is obtained by an image capture apparatus (for example, a camera) in a video capture mode or an image capture mode. The display unit 1606 may include a display panel 16061. The display panel 16061 may be configured in a form of a liquid crystal display, an organic light-emitting diode, or the like. The user input unit 1607 includes at least one of a touch panel 16071 and other input devices 16072. The touch panel 16071 is also referred to as a touchscreen. The touch panel 16071 may include two parts: a touch detection apparatus and a touch controller. The other input devices 16072 may include but are not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1601 may transmit the downlink data to the processor 1610 for processing. In addition, the radio frequency unit 1601 may transmit uplink data to the network-side device. Usually, the radio frequency unit 1601 includes but is not limited to an antenna, an amplifier, a transceiver, a coupler, a low noise amplifier, a duplexer, and the like.

The memory 1609 may be configured to store software programs or instructions and various data. The memory 1609 may mainly include a first storage area for storing a program or instructions and a second storage area for storing data. The first storage area may store an operating system, an application or instructions required by at least one function (for example, an audio play function or an image play function), and the like. In addition, the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 1609 in this embodiment of this application includes but is not limited to these and any other suitable types of memories.

The processor 1610 may include one or more processing units. Optionally, the processor 1610 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 1610.

The radio frequency unit 1601 is configured to obtain first information, where the first information is related to first content, and the first content is carried in a first wake-up signal.

The processor 1610 is configured to determine monitoring of the first content based on the first information.

Further, the first content includes a data field of the first wake-up signal.

In this embodiment of this application, a length, an ending position, or a monitoring duration of the first content can be determined, to further reduce uncertainty of monitoring of the first content, reduce complexity and latency of decoding the first content by the terminal, and achieve communication reliability.

Based on the foregoing embodiment, further, the processor 1610 is configured to determine at least one of the following:
the length of the first content;
the ending position of the first content; and
the monitoring duration of the first content monitored by the terminal.

Further, the first information includes at least one of the following:
N1 pieces of length information, where the length information is used to indicate the length of the first content;
N2 pieces of ending position information, where the position information is used to determine the ending position of the first content; and
N3 pieces of monitoring duration information, where the monitoring duration information is used to indicate the monitoring duration of the first content monitored by the terminal, where
N1, N2, and N3 are positive integers.

Further, the ending position information includes at least one of the following:
ending sequence information; and
delimiter information, where
the ending sequence and/or the delimiter is located following the first content and is used to indicate the ending of the first content.

Further, the monitoring duration information includes at least one of the following:
information of a monitoring window, where the terminal monitors the first content in the monitoring window; and
information of a timer, where the terminal monitors the first content during the running of the timer.

Further, a starting position of the monitoring window and/or the timer is at least one of the following:
an ending position of a preamble field of the first wake-up signal;
an ending position of a control field of the first wake-up signal; and
a starting position of the first content.

Further, the monitoring duration of the first content is larger than or equal to the duration of the first content.

Further, a length of the first content is N4 data units, and N4 is a positive integer.

Further, the duration of the first content is N5 time units, and N5 is a positive integer.

Further, the time unit is any one of a slot, a symbol, a millisecond, a subframe, a system frame, and a superframe.

In this embodiment of this application, complexity and latency of decoding the first content by the terminal can be further reduced.

Based on the foregoing embodiment, further, the processor 1610 is configured to:
determine target information based on an indication of a first indicator field; and
determine monitoring of the first content based on the target information, where
the target information includes at least one of the following:
   target length information determined from the N1 pieces of length information;
   target position information determined from the N2 pieces of position information; and
   target monitoring duration information determined from the N3 pieces of monitoring duration information.

Further, the first indicator field includes at least one of the following in the first wake-up signal:
a preamble field; and
a control field.

Further, the control field is located following the preamble field, and/or the control field is located preceding a data field, where
information of the data field is carried in the first wake-up signal.

Further, the first content further includes at least one of the following:
a preamble field;
a control field;
an ending sequence; and
a delimiter.

In this embodiment of this application, the length, the ending position, or the monitoring duration can be determined, to achieve communication reliability.

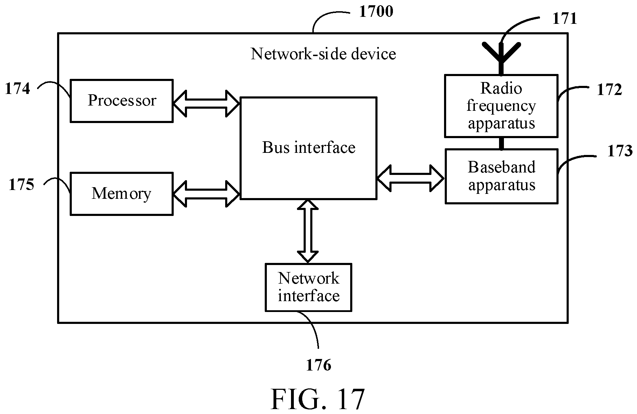

Details are as follows: An embodiment of this application further provides a network-side device. As shown in FIG. 17, the network-side device 1700 includes an antenna 171, a radio frequency apparatus 172, a baseband apparatus 173, a processor 174, and a memory 175. The antenna 171 is connected to the radio frequency apparatus 172. In an uplink direction, the radio frequency apparatus 172 receives information through the antenna 171, and transmits the received information to the baseband apparatus 173 for processing. In a downlink direction, the baseband apparatus 173 processes to-be-transmitted information, and transmits the information to the radio frequency apparatus 172; and the radio frequency apparatus 172 processes the received information and then transmits the information through the antenna 171.

The method performed by the network-side device in the foregoing embodiment may be implemented in the baseband apparatus 173, and the baseband apparatus 173 includes a baseband processor.

The baseband apparatus 173 may include, for example, at least one baseband board, where a plurality of chips are disposed on the baseband board. As shown in FIG. 17, one of the chips is, for example, the baseband processor, which is connected to the memory 175 through a bus interface, to invoke a program in the memory 175 to perform the operations of the network device shown in the foregoing method embodiments.

The network-side device may further include a network interface 176. The interface is, for example, a common public radio interface (common public radio interface, CPRI).

Details are as follows: The network-side device 1700 in this embodiment of this application further includes instructions or a program stored in the memory 175 and capable of running on the processor 174, and the processor 174 invokes the instructions or program in the memory 175 to perform the method performed by the modules shown in FIG. 14, with the same technical effect achieved. To avoid repetition, details are not described herein again.

An embodiment of this application further provides a readable storage medium. The readable storage medium stores a program or instructions. When the program or instructions are executed by a processor, the processes of the embodiments of the wake-up signal receiving method are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions, to implement the processes in the embodiments of the wake-up signal receiving method, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the embodiments of the wake-up signal receiving method, with the same technical effect achieved. To avoid repetition, details are not described herein again.

An embodiment of this application further provides a wake-up signal receiving system, including a terminal and a network-side device. The terminal may be configured to perform the steps of the foregoing wake-up signal receiving method. The network-side device may be configured to perform the steps of the foregoing wake-up signal receiving method.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a ..." does not preclude the existence of other identical elements in the process, method, article, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in embodiments of this application.

The foregoing describes embodiments of this application with reference to accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A wake-up signal receiving method, comprising:
obtaining, by a terminal, first information, wherein the first information is related to first content, and the first content is carried in a first wake-up signal; and
determining, by the terminal, monitoring of the first content based on the first information.

2. The method according to claim 1, wherein the determining monitoring of the first content comprises determining at least one of the following:
a length of the first content;
an ending position of the first content; and
a monitoring duration of the first content monitored by the terminal.

3. The method according to claim 2, wherein the first information comprises at least one of the following:
N1 pieces of length information, wherein the length information is used to indicate the length of the first content;
N2 pieces of ending position information, wherein the position information is used to determine the ending position of the first content; and
N3 pieces of monitoring duration information, wherein the monitoring duration information is used to indicate the monitoring duration of the first content monitored by the terminal, wherein
N1, N2, and N3 are positive integers.

4. The method according to claim 3, wherein the determining, by the terminal, monitoring of the first content based on the first information comprises:
determining target information based on an indication of a first indicator field; and
determining monitoring of the first content based on the target information, wherein
the target information comprises at least one of the following:
target length information determined from the N1 pieces of length information;
target position information determined from the N2 pieces of position information; and
target monitoring duration information determined from the N3 pieces of monitoring duration information.

5. The method according to claim 3, wherein the ending position information comprises at least one of the following:
ending sequence information; and
delimiter information, wherein
the ending sequence and/or the delimiter is located following the first content and is used to indicate an ending of the first content.

6. The method according to claim 3, wherein the monitoring duration information comprises at least one of the following:
information of a monitoring window, wherein the terminal monitors the first content in the monitoring window; and
information of a timer, wherein the terminal monitors the first content during the running of the timer.

7. The method according to claim 6, wherein a starting position of the monitoring window and/or the timer is at least one of the following:
an ending position of a preamble field of the first wake-up signal;
an ending position of a control field of the first wake-up signal; and
a starting position of the first content.

8. The method according to claim 2, wherein the monitoring duration of the first content is larger than or equal to a duration of the first content.

9. The method according to claim 4, wherein the first indicator field comprises at least one of the following in the first wake-up signal:
a preamble field; and
a control field.

10. The method according to claim 9, wherein the control field is located following the preamble field, and/or the control field is located preceding a data field, wherein
information of the data field is carried in the first wake-up signal.

11. The method according to claim 1, wherein a length of the first content is N4 data units, and N4 is a positive integer.

12. The method according to claim 1, wherein a duration of the first content is N5 time units, and N5 is a positive integer.

13. The method according to claim 12, wherein the time unit is any one of a slot, a symbol, a millisecond, a subframe, a system frame, and a superframe.

14. The method according to claim 1, wherein the first content comprises a data field of the first wake-up signal.

15. The method according to claim 14, wherein the first content further comprises at least one of the following:
a preamble field;
a control field;
an ending sequence; and
a delimiter.

16. A wake-up signal receiving apparatus, comprising:
a receiving module, configured to obtain first information, wherein the first information is related to first content, and the first content is carried in a first wake-up signal; and
a monitoring module, configured to determine monitoring of the first content based on the first information.

17. A wake-up signal receiving method, comprising:
transmitting, by a network-side device, first information to a terminal, wherein the first information is related to first content and is used to indicate the terminal to determine monitoring of the first content, and the first content is carried in a first wake-up signal; and
transmitting, by the network-side device, the first wake-up signal to the terminal.

18. The method according to claim 17, wherein the first information comprises at least one of the following:
N1 pieces of length information, wherein the length information is used to indicate a length of the first content;
N2 pieces of ending position information, wherein the position information is used to determine an ending position of the first content; and
N3 pieces of monitoring duration information, wherein the monitoring duration information is used to indicate a monitoring duration of the first content monitored by the terminal, wherein
N1, N2, and N3 are positive integers.

19. The method according to claim 18, wherein the first wake-up signal comprises a first indicator field, and the first indicator field is used to indicate the terminal to determine target information; and
the target information comprises at least one of the following:
target length information determined from the N1 pieces of length information;
target position information determined from the N2 pieces of position information; and
target monitoring duration information determined from the N3 pieces of monitoring duration information.

20. The method according to claim 18, wherein the ending position information comprises at least one of the following:
ending sequence information; and
delimiter information, wherein
the ending sequence and/or the delimiter is located following the first content and is used to indicate an ending of the first content.

21. The method according to claim 18, wherein the monitoring duration information comprises at least one of the following:
information of a monitoring window, wherein the terminal monitors the first content in the monitoring window; and
information of a timer, wherein the terminal monitors the first content during the running of the timer.

22. The method according to claim 21, wherein a starting position of the monitoring window and/or the timer is at least one of the following:
an ending position of a preamble field of the first wake-up signal;
an ending position of a control field of the first wake-up signal; and
a starting position of the first content.

23. The method according to claim 18, wherein the monitoring duration of the first content is larger than or equal to a duration of the first content.

24. The method according to claim 19, wherein the first indicator field comprises at least one of the following in the first wake-up signal:
a preamble field; and
a control field.

25. The method according to claim 24, wherein the control field is located following the preamble field, and/or the control field is located preceding a data field, wherein
information of the data field is carried in the first wake-up signal.

26. The method according to claim 17, wherein a length of the first content is N4 data units, and N4 is a positive integer.

27. The method according to claim 17, wherein a duration of the first content is N5 time units, and N5 is a positive integer.

28. The method according to claim 27, wherein the time unit is any one of a slot, a symbol, a millisecond, a subframe, a system frame, and a superframe.

29. The method according to claim 17, wherein the first content comprises a data field of the first wake-up signal.

30. The method according to claim 29, wherein the first content further comprises at least one of the following:
a preamble field;
a control field;
an ending sequence; and
a delimiter.

31. A wake-up signal receiving apparatus, comprising:
a first transmitting module, configured to transmit first information to a terminal, wherein the first information is related to first content and is used to indicate the terminal to determine monitoring of the first content, and the first content is carried in a first wake-up signal; and
a second transmitting module, configured to transmit the first wake-up signal to the terminal.

32. A terminal, comprising a processor and a memory, wherein the memory stores a program or instructions capable of running on the processor, and when the program or instructions are executed by the processor, the steps of the wake-up signal receiving method according to any one of claims 1 to 15 are implemented.

33. A network-side device, comprising a processor and a memory, wherein the memory stores a program or instructions capable of running on the processor, and when the program or instructions are executed by the processor, the steps of the wake-up signal receiving method according to any one of claims 17 to 30 are implemented.

34. A readable storage medium, wherein the readable storage medium stores a program or instructions, and when the program or instructions are executed by a processor, the wake-up signal receiving method according to any one of claims 1 to 15 is implemented, or the steps of the wake-up signal receiving method according to any one of claims 17 to 30 are implemented.
